Europäisches Patentamt

European Patent Office

Office européen des brevets

(19)

(11) **EP 0 769 768 B1**

(12) **FASCICULE DE BREVET EUROPEEN**

(45) Date de publication et mention
de la délivrance du brevet:
**12.01.2000 Bulletin 2000/02**

(51) Int Cl.[7]: **G07F 7/10**

(21) Numéro de dépôt: **96402210.7**

(22) Date de dépôt: **16.10.1996**

(54) **Procédé cryptographique de protection contre la fraude**

Kryptographisches Verfahren zum Schutz gegen Betrug

Cryptographic method to protect against fraud

(84) Etats contractants désignés:
**DE FR GB**

(30) Priorité: **17.10.1995 FR 9512144**

(43) Date de publication de la demande:
**23.04.1997 Bulletin 1997/17**

(73) Titulaire: **FRANCE TELECOM**
**75015 Paris (FR)**

(72) Inventeurs:
• **Gilbert, Henri**
**91440 Bures sur Yvette (FR)**
• **Arditti, David**
**92140 Clamart (FR)**

(74) Mandataire: **Signore, Robert et al**
**c/o SOCIETE DE PROTECTION DES**
**INVENTIONS**
**3, rue du Docteur Lanceraux**
**75008 Paris (FR)**

(56) Documents cités:
**EP-A- 0 294 248** **EP-A- 0 409 701**
**FR-A- 2 471 003** **FR-A- 2 698 195**

## Description

### Domaine technique

La présente invention a pour objet un procédé cryptographique de protection contre la fraude. Le procédé de l'invention est principalement destiné à la protection logique des cartes à circuit intégré à logique câblée ou à microprocesseur, notamment les cartes prépayées utilisées pour diverses transactions : télécartes, cartes utilisées dans des distributeurs automatiques, dans des parcmètres, pour le paiement de services de transports publics ou de péages routiers, etc... Ce procédé est particulièrement adapté aux contraintes qu'imposent les cartes à logique câblée dites synchrones, qui sont des cartes à très bas coût.

Le procédé de l'invention permet d'empêcher des fraudes telles que la recopie ou l'imitation d'une carte ou encore l'utilisation frauduleuse d'une vraie carte (par altération d'instructions entrées dans la carte ou de données lues dans la carte) et ce, à un coût moindre et avec une sécurité mieux quantifiable que par les procédés de protection logique actuellement employés.

### Etat de la technique

Pour certaines cartes à mémoire dotées d'un microprocesseur, l'utilisation d'algorithmes d'authentification ou d'algorithmes d'authentification de message (également appelés MAC) permet au module de sécurité (ou plus généralement à l'application à laquelle accède la carte) de s'assurer de l'identité d'une carte et, si celle-ci possède une fonction de comptage d'unités de taxation, de débiter celle-ci de façon sûre. Les protocoles de sécurité utilisés reposent sur le partage, entre la carte et l'application, d'une clé secrète, qui peut, par exemple, être déduite d'une clé maîtresse valant pour l'application tout entière, par un calcul de diversification portant sur le numéro de série de la carte. La clé secrète est déposée dans la carte lors de la personnalisation et intervient dans les algorithmes d'authentification ou d'authentification de messages qui peuvent être très variés, mais qui font généralement intervenir des aléas, afin d'éviter toute fraude par rejeu.

Trois exemples simples de tels protocoles peuvent être indiqués :

**Protocole A :** envoi, par l'application, d'un nombre aléatoire à la carte, puis lecture, par l'application, du résultat du calcul d'authentification effectué sur ce nombre par la carte. La comparaison entre le résultat lu dans la carte et le résultat du calcul d'authentification effectué par l'application constitue une vérification de l'identité de la carte.

**Protocole B :** envoi, par l'application, d'un ordre de décrémentation d'un compteur interne à la carte et contenant, en paramètre, un nombre aléatoire émis par l'application, puis lecture, par l'application du résultat d'un calcul d'authentification effectué sur ce nombre par la carte. La comparaison entre le résultat lu dans la carte et le résultat du calcul d'authentification effectué par l'application constitue une vérification de ce que la décrémentation a bien été effectuée par la carte.

**Protocole C :** envoi, par l'application, d'un nombre aléatoire et d'un ordre de lecture certifiée d'une donnée contenue dans la carte, puis lecture, par l'application, du résultat d'un calcul d'authentification de message (MAC) effectué par la carte à partir du nombre aléatoire, de la donnée à certifier. La comparaison entre le résultat lu dans la carte et le résultat du calcul d'authentification de message effectué par l'application permet à l'application de vérifier l'authenticité de la donnée.

Ces algorithmes d'authentification ou d'authentification de messages utilisés dans les cartes à microprocesseur sont relativement complexes (généralement de l'ordre de quelques centaines d'octets de code pour un microprocesseur à 8 bits). L'emploi de tels algorithmes est impossible dans le cas des cartes à moindre coût, comme par exemple les cartes synchrones.

En conséquence, la plupart des cartes à logique câblée (comme par exemple les télécartes) n'utilisent aucun procédé logique de protection : la seule protection contre la fraude est la difficulté matérielle de fabrication d'une fausse carte reproduisant le comportement d'une vraie, difficulté plus grande que dans les cas des cartes à piste magnétique.

Cependant, dans certaines cartes synchrones récentes, des algorithmes d'authentification et d'authentification de messages spécifiques, exécutables par des cartes synchrones, et de structure très différente de celle des algorithmes généralement utilisés sur des microprocesseurs ont été conçus. De tels algorithmes sont décrits dans les documents FR-A-2 650 097, et FR-A-2 698 195.

L'inconvénient principal de la technique connue utilisée dans les cartes à microprocesseur est sa complexité, qui interdit de l'implanter dans des cartes à très bas coût et qui, même dans le cas de cartes dotées d'un microprocesseur, est parfois pénalisante.

Quant à la technique connue utilisée dans les cartes à logique câblée, elle présente les inconvénients suivants :

- de même que pour les algorithmes à clé secrète des cartes à microprocesseur, il n'existe pas de preuve de sécurité pour les algorithmes de ce type. De plus, les très fortes contraintes imposées par les capacités réduites des cartes synchrones interdisent de préserver, dans leur conception, une "marge de sécurité" aussi large que pour les algorithmes des cartes à microprocesseurs. La prudence conduit, dans ces conditions, à conserver secret l'algorithme utilisé, ce qui peut créer des difficultés pour la commercialisation de la carte où il est implanté ;

- le dispositif de protection logique de telles cartes représente une fraction non négligeable de leur surface de silicium (et donc de leur coût).

## Exposé de l'invention

Le but de l'invention est de remédier aux inconvénients des procédés d'authentification ou d'authentification de messages précédemment cités, en tirant parti du fait que, dans de très nombreuses applications, on peut se contenter d'un nombre faible d'utilisations entre deux rechargements (cas des cartes rechargeables) ou pendant la durée de vie d'une carte (cas des cartes non rechargeables).

L'invention repose sur l'idée que si l'on accepte une telle limitation du nombre d'utilisations (de l'ordre d'une centaine de transactions), et si, d'autre part, on utilise pour la protection de la carte, des clés plus longues que celles utilisées dans les algorithmes d'authentification ou d'authentification de messages cités précédemment, il devient possible d'utiliser la clé à des fins d'authentification ou d'acquittement d'une instruction, voire même à des fins de certification de données contenues dans la carte, selon un procédé possédant les avantages suivants :

- sécurité prouvable et quantifiable : la sécurité du procédé contre un fraudeur cherchant à exploiter les données collectées en observant les échanges pour passer avec succès un nouveau contrôle ou cloner une carte, est indépendante de la puissance de calcul et des connaissances cryptanalytiques du fraudeur, ce qui n'est pas le cas des procédés d'authentification ou d'authentification de messages cités précédemment ;
- les calculs sont beaucoup plus simples que dans les procédés d'authentification ou d'authentification de messages cités précédemment, et mieux adaptés aux contraintes des cartes synchrones, ce qui conduit pour certaines technologies de circuits à des économies supérieures au surcoût entraîné par l'augmentation de la taille de la clé.

Les calculs nécessités par le procédé de l'invention sont essentiellement des calculs de produits scalaires modulo 2 entre mots de n bits. Un tel produit est défini de la façon suivante : si $X=(x_0, ..., x_{n-1})$ et $Y=(y_0, ..., y_{n-1})$ sont deux mots de n bits pouvant prendre chacun les valeurs 0 ou 1, le produit scalaire de X par Y, noté X.Y, est égal à

$$\left( \sum_{i=0}^{n-1} x_i \, , \, y_i \right)$$

mod 2. Autrement dit, on effectue le produit des bits de même rang des deux mots et on effectue la somme, modulo 2, des n produits obtenus.

De tels calculs peuvent être effectués très facilement par des cartes synchrones, parce qu'ils sont réalisables au moyen de n itérations du calcul élémentaire très simple consistant à calculer (par un ET logique entre deux bits) un terme de la forme $x_i.y_i$, puis à l'accumuler (par un OU exclusif) avec la valeur courante dans une bascule ou un bit de mémoire.

Le procédé de l'invention repose sur un calcul cryptographique réalisé à la fois dans les cartes et dans l'application qui vérifie les cartes, ce calcul fournissant, en fonction d'un mot d'entrée R (par exemple un nombre aléatoire provenant de l'application) et d'une clé secrète K, un mot de réponse S. Soit r le nombre de mots de n bits constituant le mot d'entrée R et soit k le nombre de mots de n bits constituant la clé secrète K. Un mot de R, noté $R_i$ (i étant un indice entier allant de 0 à r-1) est combiné aux k mots de K notés $K_j$ (où j est un entier allant de 0 à k-1), pour obtenir k produits scalaires $R_iK_j$ (i fixe, j allant de 0 à k-1). Chacun de ces k produits scalaires donne un bit, égal à 0 ou à 1. Comme il existe r mots $R_i$ (i allant de 0 à r-1), cette série de produits scalaires est obtenue k fois, soit, au total kr bits. Le mot de réponse S est donc un mot de kr bits. Chaque bit de ce mot peut être noté $s(i,j)=R_iK_j$ (i de 0 à r-1 et j de 0 à k-1).

Les paramètres n, k, r peuvent être choisis pour réaliser des compromis variés entre les tailles de R, de K et de S, et le nombre maximum d'interrogations permises pour une même clé K.

De façon plus précise, la présente invention a donc pour objet un procédé cryptographique de protection contre la fraude dans des transactions mettant en jeu un premier moyen, appelé carte, détenu par un utilisateur et un second moyen, appelé application, ce procédé étant caractérisé par le fait qu'il comprend les opérations suivantes :

- on attribue à la carte et à l'application un premier mot K, appelé clé secrète, ce premier mot étant constitué par un nombre k de mots ayant chacun un nombre n de bits,
- on définit un second mot R, appelé mot d'entrée, ce second mot étant constitué par un nombre r de mots ayant chacun un nombre n de bits,
- la carte et l'application calculent chacune le produit scalaire modulo 2 de chacun des r mots du mot d'entrée R avec chacun des k mots de la clé secrète K, ce calcul fournissant un troisième mot S, appelé résultat, ce troisième mot ayant un nombre k.r de bits,
- la carte adresse le résultat S qu'elle a obtenu à l'application et l'application vérifie si ce résultat est identique au résultat qu'elle a elle-même obtenu.

Dans un premier mode de mise en oeuvre, c'est l'application qui produit le mot d'entrée R et qui l'adresse à la carte.

Dans un second mode de mise en oeuvre, l'application fournit un aléa à la carte, et le mot d'entrée R est obtenu par combinaison entre cet aléa et une donnée lue dans la carte.

Le calcul du mot résultat S peut s'effectuer séquentiellement en prenant chaque mot du mot d'entrée R au moment où il est disponible et en le multipliant par tous les k mots de la clé secrète K. Mais ce calcul peut aussi s'effectuer en parallèle, en recevant les r mots constituant le mot d'entrée R et en calculant en parallèle le produit scalaire de chacun de ces r mots avec les k mots de la clé secrète K.

## Exposé détaillé de modes de réalisation

La sécurité du calcul cryptographique proposé par l'invention repose sur la propriété suivante : pour un nombre de calculs c inférieur à n/r, la probabilité (sur la $c^{ième}$ entrée R) pour qu'un fraudeur connaissant les c-1 couples (R,S) d'entrée et de sortie précédentes sache prédire une information quelconque sur la sortie S correspondant à la $c^{ième}$ entrée R (c'est-à-dire, par exemple, sache prédire l'un des bits de S avec une probabilité supérieure à 1/2) est inférieure ou égale à $r/2^{n-cr+1}$.

La preuve de cette propriété peut être apportée de la manière suivante : les seuls cas défavorables sont ceux pour lesquels il existe un indice i compris entre 0 et r-1, tel que la composante $R_i$ de la $c^{ième}$ entrée R soit une combinaison linéaire modulo 2 des composantes $R_j$ (j=0, ...r-1) des c-1 entrées R utilisées pour les c-1 premiers calculs et des r-1 autres composantes $R_j$ (j=0, ..., r-1 ; j≠i) de la $c^{ième}$ entrée. Or, pour chaque indique i, la probabilité d'un tel événement est inférieure à $1/2^{n-rc+1}$, d'où la majoration annoncée pour la probabilité des cas défavorables. De plus, dans les cas favorables, les $2^{rk}$ réponses S à la $c^{ième}$ entrée R a priori possibles sont strictement équiprobables pour un fraudeur connaissant les c-1 premiers couples (R,S), parce que les clés K compatibles avec ces c-1 premiers couples et conduisant à une $c^{ième}$ réponse S donnée constituent un sous-espace affine de l'espace des clés, de dimension indépendante de la valeur de S.

Un exemple numérique peut être donné à titre explicatif : si r=2, k=8 et n=128, à l'issue de 49 calculs, la réponse S (de longueur 16 bits) à une $50^{ième}$ question R (de longueur 256 bits) est totalement imprédictible sauf pour une proportion d'au plus $\frac{2}{2^{128-100+1}}$ (c'est-à-dire environ $\frac{1}{268.10^6}$) des valeurs possibles de la $50^{ième}$ question. Dans cet exemple, la longueur de la clé K est de 1024 bits.

Les calculs cryptographiques de l'invention peuvent être utilisés dans des protocoles variés, pouvant réaliser, selon le cas, une authentification pure, la vérification par une application de la bonne exécution par une carte d'une instruction telle que la décrémentation d'un compteur de taxation, voire même la lecture certifiée, dans une carte, de données telles que la valeur d'un compteur de taxation. Ces protocoles diffèrent selon la nature de l'entrée R (qui peut être, selon les cas, une donnée fournie par l'application, une donnée interne à la carte ou un mélange des deux), et les conditions externes (instructions provoquant l'exécution des calculs) et internes (portant sur l'état de la carte) conduisant à l'exécution des calculs.

Dans tous les cas, il est essentiel qu'une même clé ne puisse être utilisée dans la carte qu'un nombre limité de fois, dépendant de la valeur des paramètres n et r et des marges de sécurité que l'on souhaite respecter. Un moyen naturel de réaliser une telle limitation est d'introduire dans la carte un compteur évoluant systématiquement à chaque exécution des calculs, et de n'autoriser, dans la carte, l'exécution d'un nouveau calcul que si une condition portant sur la valeur de ce compteur est satisfaite. Il existe des méthodes diverses et connues pour réaliser dans une carte un tel comptage.

Trois protocoles de sécurité carte-application (protocoles 1, 2 et 3) fondés sur le procédé de l'invention et destinés à offrir un service de sécurité comparable à celui qu'offrent respectivement les protocoles mentionnés plus haut pour des cartes plus complexes, vont être décrits, à titre de modes possibles de réalisation de l'invention. Les protocoles 1 et 2 seront décrits explicitement. Par contre, le procédé de calcul précédent n'est qu'un des éléments des calculs à réaliser pour le protocole 3, et le procédé utilisé pour réaliser le reste des calculs pour le protocole 3 n'est pas explicité.

## Protocole 1 : Authentification pure

Une authentification pure peut être utilisée pour la vérification de l'identité d'une carte, ou pour la vérification d'un droit (exemple : droit d'accéder à un service), en s'assurant de la possession, par une carte, d'une clé d'authentification liée à ce droit.

Lors de la personnalisation (ou du rechargement) d'une carte, une clé secrète K est déposée dans la carte, et un compteur interne CPT du nombre d'authentification résiduelles autorisées est mis à une valeur CPTMAX. A chaque fois que l'application doit réaliser une authentification d'une carte (dont elle a préalablement lu le numéro et retrouvé la clé secrète K, par exemple au moyen d'un calcul de diversification), elle envoie à la carte un nombre aléatoire R. Si la valeur du compteur CPT est supérieure ou égale à 1, la carte décrémente la valeur de CPT d'une unité et effectue le calcul de S (et ce, dans le cas d'une carte synchrone, au fur et à mesure que les bits de R sont entrés dans la carte). L'application peut alors lire la réponse S de la carte et la vérifier.

## Protocole 2 : Vérification de la bonne exécution d'une instruction telle que la décrémentation d'un compteur

L'exemple de protocole proposé ici ressemble beaucoup au protocole précédent. La différence essentielle est que le compteur interne CPT ne représente pas seulement le nombre de calculs résiduels autorisés dans la carte, mais également le "crédit" restant de la carte, par exemple en unités de taxation.

Pour décrémenter le crédit de la carte d'une unité, l'application lui envoie une instruction de décrémentation accompagnée d'un nombre aléatoire R. Si le crédit restant est positif, la carte décrémente le compteur de crédit CPT d'une unité, puis effectue un calcul cryptographique à partir de l'entrée R et de sa clé K. L'application peut alors lire la réponse S obtenue, et vérifier ainsi que l'instruction de décrémentation a bien été exécutée.

**Protocole 3 : Certification d'une donnée interne à une carte**

On souhaite vérifier l'authenticité de la valeur d'une donnée D lue par l'application dans une carte. Cette donnée peut, par exemple, représenter le crédit restant d'une carte, exprimé en unités monétaires, etc...

Un compteur CPT du nombre de calculs résiduels autorisés, distinct de la donnée D à signer, et initialisé à une valeur CPTMAX lors de l'installation de la clé, est ici encore utilisé. A la réception d'une instruction de lecture certifiée par la carte, et sous la condition que la valeur du compteur CPT soit strictement positive, un algorithme d'authentification de message exécuté, dans lequel le calcul cryptographique de formation du produit scalaire décrit plus haut intervient une ou plusieurs fois avec des entrées R dépendant d'un aléa A fourni par l'application et de la donnée D lue dans la carte. L'instruction entraîne, comme précédemment, une décrémentation du compteur CPT. Le résultat de l'algorithme est un mot d'authentification de message (MAC), utilisable par l'application pour vérifier l'authenticité de la donnée D.

**Revendications**

**1.** Procédé cryptographique de protection contre la fraude dans des transactions mettant en jeu un premier moyen, appelé carte, détenu par un utilisateur et un second moyen, appelé application, ce procédé étant caractérisé par le fait qu'il comprend les opérations suivantes :

- on attribue à la carte et à l'application un premier mot K, appelé clé secrète, ce premier mot étant constitué par un nombre k de mots ayant chacun un nombre n de bits,
- on définit un second mot R appelé mot d'entrée, ce second mot étant constitué par un nombre r de mots ayant chacun un nombre n de bits,
- la carte et l'application calculent chacune le produit scalaire modulo 2 de chacun des r mots du mot d'entrée R avec chacun des k mots de la clé secrète K, ce calcul fournissant un troisième mot S, appelé résultat, ce troisième mot ayant un nombre k.r de bits,

- la carte adresse le résultat S qu'elle a obtenu à l'application et l'application vérifie si ce résultat est identique au résultat qu'elle a elle-même obtenu.

**2.** Procédé selon la revendication 1, caractérisé par le fait que le mot d'entrée R est produit par l'application et transmis à la carte.

**3.** Procédé selon la revendication 1, caractérisé par le fait que le mot d'entrée R est obtenu à partir d'un aléa fourni par l'application et d'une donnée lue dans la carte.

**4.** Procédé selon la revendication 1, caractérisé par le fait que le calcul du mot résultat S s'effectue séquentiellement en prenant chaque mot du mot d'entrée R au moment où il est disponible et en le multipliant par tous les k mots de la clé secrète K.

**5.** Procédé selon la revendication 1, caractérisé par le fait que le calcul du mot résultat S s'effectue en parallèle, en recevant les r mots constituant le mot d'entrée R et en calculant en parallèle le produit scalaire de chacun de ces r mots avec les k mots de la clé secrète K.

**6.** Procédé selon la revendication 1, caractérisé par le fait que l'on compte dans la carte le nombre de fois qu'un calcul de résultat S a été effectué et que l'on n'exécute un nouveau calcul que si ce nombre est inférieur à un nombre donné.

**Patentansprüche**

**1.** Kryptographisches Verfahren zum Schutz gegen Betrug bei Transaktionen, das ein erstes, Karte genanntes Mittel, das ein Benutzer besitzt, und ein zweites, Applikation genanntes Mittel einsetzt, **dadurch gekennzeichnet**, daß es folgende Operationen umfaßt:

- man teilt der Karte und der Applikation ein erstes Wort K zu, wobei dieses erste Wort durch eine Anzahl k von Wörtern gebildet wird, von denen jedes eine Anzahl n von Bits hat,
- man definiert ein zweites Wort R, Eingangswort genannt, wobei dieses zweite Wort durch eine Anzahl r von Wörtern gebildet wird, von denen jedes eine Anzahl n von Bits hat,
- die Karte und die Applikation berechnen jede das Skalarprodukt modulo 2 von jedem der r Wörter des Eingangsworts R mit jedem der k Wörter des Geheimschlüssels K, wobei diese Rechnung ein drittes Wort S liefert, Resultat genannt, und dieses dritte Wort eine Anzahl von k.r Bits hat,

- die Karte adressiert das Resultat S, das sie erhalten hat, an die Applikation, und die Applikation prüft, ob dieses Resultat identisch ist mit dem Resulat, das sie selbst erhalten hat.

**2.** Verfahren nach Anspruch 1, dadurch gekennzeichnet, daß das Eingangswort R durch die Applikations erzeugt und an die Karte übertragen wird.

**3.** Verfahren nach Anspruch 1, dadurch gekennzeichnet, daß das Eingangswort R durch einen Zufall, geliefert durch die Applikation, und durch eine in der Karte gelesene Größe gebildet wird.

**4.** Verfahren nach Anspruch 1, dadurch gekennzeichnet, daß die Berechnung des Worts Resultat S sequentiell erfolgt, indem man jedes Wort des Eingangsworts R in dem Moment, in dem es verfügbar ist, nimmt und mit allen k Wörtern des Geheimschlüssels K multipliziert.

**5.** Verfahren nach Anspruch 1, dadurch gekennzeichnet, daß die Berechnung des Worts Resultat S parallel erfolgt, indem man die r das Eingangswort R bildenden Wörter empfängt und parallel das Skalarprodukt jedes dieser r Wörter mit den k Wörtern des Geheimschlüssels K berechnet.

**6.** Verfahren nach Anspruch 1, dadurch gekennzeichnet, daß man in der Karte die Anzahl, wieviele Male eine Berechnung des Resultats S durchgeführt wurde, zählt und daß man eine neue Berechnung nur durchführt, wenn diese Anzahl niedriger ist als eine bestimmte Anzahl.

**Claims**

**1.** Cryptographic process for protecting against fraud in transactions involving a first means, called a card, held by a user and a second means, called an application, said process being characterized in that it comprises the following operations:

- allocation takes place to the card and to the application of a first word K, called secret key, said first word being constituted by a number k of words, each of which has a number n of bits,
- a second word R, called input word, is defined, said second word being constituted by a number r of words, each having a number n of bits,
- the card and application in each case calculate the modulo 2 scalar product of each of the r words of the input word R with each of the k words of the secret key K, said calculation supplying a third word S, called the result, said third word having a number k.r of bits,

- the card addresses the result S which it has obtained to the application and the application checks whether this result is identical to the result which it obtained.

**2.** Process according to claim 1, characterized in that the input word R is produced by the application and transmitted to the card.

**3.** Process according to claim 1, characterized in that the input word R is obtained from a random variable supplied by the application and a data item read in the card.

**4.** Process according to claim 1, characterized in that the calculation of the result word S takes place sequentially taking each word of the input word R at the time when it is available and multiplying it by all the k words of the secret key K.

**5.** Process according to claim 1, characterized in that the calculation of the result word S takes place in parallel, on receiving the r words constituting the input word R and calculating in parallel the scalar product of each of these r words with the k words of the secret key K.

**6.** Process according to claim 1, characterized in that counting takes place in the card of the number of times that a result calculation S has taken place and a new calculation only takes place if this number is below a given number.